(19) Europäisches Patentamt
European Patent Office
Office européen des brevets

(11) **EP 3 304 531 B1**

(12) **FASCICULE DE BREVET EUROPEEN**

(45) Date de publication et mention
de la délivrance du brevet:
**02.12.2020 Bulletin 2020/49**

(21) Numéro de dépôt: **16728907.3**

(22) Date de dépôt: **06.06.2016**

(51) Int Cl.:
*G06F 21/12* *(2013.01)*          *H04L 9/00* *(2006.01)*
*G09C 1/00* *(2006.01)*

(86) Numéro de dépôt international:
**PCT/EP2016/062766**

(87) Numéro de publication internationale:
**WO 2016/193493 (08.12.2016 Gazette 2016/49)**

(54) **PROCÉDÉ DE CHIFFREMENT, PROCÉDÉ DE CHIFFREMENT, DISPOSITIFS ET PROGRAMMES CORRESPONDANTS**

VERSCHLÜSSELUNGSVERFAHREN, ENTSPRECHENDES VERSCHLÜSSELUNGSVERFAHREN, VORRICHTUNGEN UND PROGRAMME

ENCRYPTION METHOD, CORRESPONDING ENCRYPTION METHOD, DEVICES AND PROGRAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.06.2015 FR 1555173**

(43) Date de publication de la demande:
**11.04.2018 Bulletin 2018/15**

(73) Titulaire: **Ingenico Group**
**75015 Paris (FR)**

(72) Inventeurs:
• **BRIER, Eric**
  **26120 Malissard (FR)**
• **DE HARO, Leonard**
  **75005 Paris (FR)**

(74) Mandataire: **Vidon Brevets & Stratégie**
**16B, rue de Jouanet**
**BP 90333**
**35703 Rennes Cedex 7 (FR)**

(56) Documents cités:
**GB-A- 2 492 618**

• **W Thompson: "Cryptomorphic Programming: A Random Program Concept", , 1 juin 2005 (2005-06-01), XP055080964, Extrait de l'Internet: URL:http://citeseerx.ist.psu.edu/viewdoc/download?doi=10.1.1.97.1816&rep=rep1&type=pdf [extrait le 2013-09-25]**
• **Willard Thompson ET AL: "Semantic Encryption Transformation Scheme*", , 1 janvier 2004 (2004-01-01), XP055267635, Extrait de l'Internet: URL:http://citeseerx.ist.psu.edu/viewdoc/download;jsessionid=B37A7C2580292B703C7C2AF C980285D7?doi=10.1.1.302.4780&rep=rep1&type=pdf [extrait le 2016-04-21]**

## EP 3 304 531 B1

**Description**

### 1. Domaine

La technique proposée se rapporte à la sécurisation de l'échange d'information. Plus spécifiquement, la technique proposée se rapporte au chiffrement de données. Plus spécifiquement encore, il s'agit de chiffrer et de déchiffrer un code informatique. L'une des raisons pour lesquelles il est intéressant de chiffrer un code informatique est de vouloir se prémunir d'un vol d'un tel code informatique. Une fois le code chiffré, il est également nécessaire de le déchiffrer. Ainsi, la technique porte que le chiffrement et le déchiffrement d'un code informatique.

**2**. **Art antérieur** Il est connu de l'état de l'art les documents

XP055080964 Cryptomorphic Programming: A Random Program Concept

GB2492618 "Déchiffrement et compilation du code source sur une machine virtuelle de confiance"

Dans certains environnements sensibles, il peut être nécessaire de devoir chiffrer un code informatique. Par exemple, certains équipements, tels que des terminaux de paiements, sont soumis à de nombreuses attaques de la part d'individus, d'entreprises ou de gouvernements mal intentionnés. Certaines de ces attaques sont logicielles. Cela signifie que le ou les logiciels utilisés pour faire fonctionner le terminal sont analysés, inspectés, pour tenter d'y découvrir une ou plusieurs failles. Une autre attaque peut consister à décompiler le logiciel, à modifier le code ainsi obtenu (en y insérant une ou plusieurs instructions frauduleuses) puis à recompiler le logiciel et à réimplanter ce logiciel modifié dans le terminal.

On rappelle à toute fin utile qu'un logiciel peut prendre plusieurs états dont : un état d'origine, dans lequel le logiciel est écrit ou composé en code source et un état compilé dans lequel le logiciel dans son état d'origine est transformé en un logiciel exécutable par une machine ou une processeur. Ce logiciel exécutable est composé d'instructions dites « machines » qui peuvent être mise en œuvre directement par le processeur au sein duquel le logiciel est exécuté.

En règle générale, les dispositifs qui comprennent des logiciels sensibles sont physiquement résistants aux attaques. C'est par exemple le cas des terminaux de paiement qui, lorsqu'ils sont attaqués (par exemple en tentant d'ouvrir un terminal pour y insérer une ou plusieurs « sondes »), sont en mesure de procéder à un effacement complet d'une mémoire sécurisée, voire sont en mesure de se mettre complètement hors service.

Ainsi, il est très complexe, pour un attaquant, d'obtenir directement le code du programme au sein du dispositif protégé. Dès lors, un moyen plutôt simple consiste à récupérer le code par exemple lors de mises à jour du programme : de telles mises à jour interviennent plus ou moins régulièrement. Elles consistent généralement à transmettre au dispositif un code compilé intégré par exemple dans un firmware. Lorsque le dispositif reçoit le nouveau firmware, il se met à jour en installant le nouveau programme exécutable contenu dans ce firmware. Ainsi, une personne mal intentionnée peut plus facilement récupérer un firmware qui est transmis lors d'une mise à jour, particulièrement lorsque ce firmware est transmis en utilisant un réseau de communication non sécurisé.

Pour se prémunir d'une obtention non souhaitée du firmware et donc du code qu'il contient, les fabricants de matériels sensibles ont donc chiffré ce code ou de firmware afin que, même en cas d'interception, le code soit protégé. Le chiffrement est usuellement réalisé en utilisant une clé de chiffrement. Il s'avère cependant que dans la lutte permanente qui est livrée entre les fabricants et les attaquants, ces derniers peuvent tout de même parvenir, malgré tout, à obtenir une ou plusieurs clés de chiffrement susceptibles d'être utilisées pour chiffrer le code source compilé. Dès lors, il est nécessaire, pour le fabricant de matériel, de trouver une autre solution.

Une solution commune de l'art antérieur pourrait consister à individualiser la distribution du logiciel compilé : plus particulièrement, plutôt que mettre en œuvre une distribution unique, pour tous les matériels concernés, il pourrait être envisagé de chiffrer indépendamment le logiciel en fonction d'un exemplaire particulier du matériel auquel il est destiné. Un tel chiffrement « unique » peut par exemple comprendre l'utilisation d'un numéro d'identification unique de l'appareil comme paramètre de la fonction de génération de clé. Dès lors, chaque logiciel chiffré pourrait être uniquement déchiffré par le terminal dont le numéro d'identification unique a été utilisé pour créer la clé de chiffrement. Cette méthode pourrait convenir, mais elle pose plusieurs problèmes. Le premier problème est relatif à la gestion des clés : la méthode s'applique bien en effet à un nombre restreint d'exemplaires de matériels à protéger, mais lorsque le nombre devient trop important, il peut s'avérer compliquer de gérer les clés nécessaires. Le deuxième problème réside dans le fait que cette solution ne règle pas la situation dans laquelle l'attaquant obtient à la fois la mise à jour et la clé d'un même appareil.

Une autre possibilité serait de placer la clé de chiffrement chez un tiers de confiance. Cela pose dès problème en cas d'absence de connectivité à un réseau de communication. En effet, outre une mise à jour en utilisant un réseau de communication, il est également fréquent de devoir réaliser des mises à jour locales, en utilisant par exemple une clé USB ou une carte mémoire. Or ce type de mise à jour ne s'utilise pas aisément avec un tiers de confiance qui possède une copie d'une clé de chiffrement ou de déchiffrement.

Il est dès lors nécessaire de proposer une solution alternative qui tienne compte du fait que l'attaquant peut disposer d'une ou plusieurs clés permettant de déchiffrer le code du programme informatique

L'invention est définie par les revendications indépendantes. Les modes de réalisation préférés sont définis par les revendications dépendantes.

## 3. Résumé

La technique proposée ne présente pas ces inconvénients de l'art antérieur. Plus particulièrement, la technique proposée porte sur une méthode de chiffrement comprenant une phase de codage spécifique. Cette phase de codage est dite intelligente dans la mesure où elle tient compte du contenu du code pour effectuer le codage. Plus particulièrement, l'invention se rapporte à un procédé de chiffrement d'un code à chiffrer d'un programme informatique à l'aide d'une clé de chiffrement sélectionnée parmi au moins deux clés de chiffrement. Un tel procédé comprend :

- une étape d'obtention d'une grammaire descriptive du langage du code à chiffrer ;
- une étape de codage du code à chiffrer à l'aide de la grammaire descriptive délivrant une chaine de caractères au sein de laquelle au moins une instruction de départ du code à chiffrer est codée en une représentation dans la chaine de caractères ;
- une étape de chiffrement de la chaine de caractères à l'aide d'une clé de chiffrement appartenant à l'ensemble de clés de chiffrement, délivrant une chaine chiffrée.

Ainsi, la technique proposée permet de réaliser un codage avant chiffrement. Cependant, à la différence des techniques de codage avant chiffrement qui peuvent exister, le codage réalisé dans la présente technique est un codage intelligent. Plus particulièrement, le codage tient compte de la source, i.e. du code à chiffrer. En d'autres termes, la technique permet d'intégrer le codage comme étant une étape à part entière du chiffrement, alors qu'habituellement le codage est plutôt une phase utilisée pour faciliter l'opération de chiffrement. Dans la technique telle que proposée, le codage sert à transformer le code à chiffrer en fonction de la signification de ce code.

Selon une caractéristique particulière, ladite étape de codage comprend, pour une instruction de départ du code à chiffrer, une étape d'obtention, au sein de ladite grammaire descriptive, d'un type de l'instruction de départ et une étape d'obtention, au sein de ladite grammaire descriptive, d'un identifiant de l'instruction de départ au sein d'un cardinal du type de l'instruction de départ.

Ainsi, la représentation d'une instruction

Selon un mode de réalisation particulier, caractérisé en ce que ladite étape de codage comprend, pour une instruction de départ du code à chiffrer, une étape de calcul de ladite représentation en fonction dudit type de l'instruction de départ et dudit identifiant de l'instruction de départ au sein du cardinal du type de l'instruction de départ.

Selon un mode de réalisation particulier, ladite étape de codage est mise en œuvre de manière récursive, une représentation d'une instruction de départ étant calculée à l'issue d'un calcul préalable d'une représentation d'une instruction suivante du code à chiffrer.

Selon un mode de réalisation particulier, ladite étape de codage du code à chiffrer délivre une chaine de caractères comprenant un unique entier.

Ainsi, toute clé de chiffrement est à même de pourvoir chiffrer une telle chaine de caractères.

Selon un autre aspect, il est également décrit un dispositif de chiffrement d'un code à chiffrer d'un programme informatique à l'aide d'une clé de chiffrement sélectionnée parmi au moins deux clés de chiffrement. Un tel dispositif comprend :

- des moyens d'obtention d'une grammaire descriptive du langage du code à chiffrer ;
- un module de codage du code à chiffrer à l'aide de la grammaire descriptive délivrant une chaine de caractères au sein de laquelle au moins une instruction de départ du code à chiffrer est codée en une représentation dans la chaine de caractères ;
- des moyens de chiffrement de la chaine de caractères à l'aide d'une clé de chiffrement appartenant à l'ensemble de clés de chiffrement, délivrant une chaine chiffrée.

Selon un autre aspect, il est également décrit un procédé de déchiffrement d'un code d'un programme informatique à l'aide d'une clé de chiffrement sélectionnée parmi au moins deux clés de chiffrement. Un tel procédé comprend :

- une étape de d'obtention d'une chaine chiffrée ; Cette chaine de caractère chiffrée résulte a priori d'un chiffrement réalisé à l'aide du procédé présenté précédemment ;
- une étape d'obtention d'une clé de chiffrement appartenant à l'ensemble de clés de chiffrement; il peut s'agir des mêmes clés que celles qui ont servi à la réalisation du chiffrement ou bien de clés publiques ou privées dans le cas d'un chiffrement asymétrique ;
- une étape de déchiffrement de la chaine chiffrée à l'aide de la clé de chiffrement, délivrant une chaine de caractères ;

- une étape d'obtention d'une grammaire descriptive du langage du code à chiffrer ;
- une étape de décodage de la chaine de caractères à l'aide de la grammaire descriptive délivrant une chaine de caractères décodée au sein de laquelle au moins une représentation dans la chaine de caractères est décodée en une instruction chaine de caractères décodée.

La technique se rapporte également à un dispositif de déchiffrement d'un code d'un programme informatique à l'aide d'une clé de chiffrement sélectionnée parmi au moins deux clés de chiffrement. Un tel dispositif comprend :

- des moyens d'obtention d'une chaine chiffrée ; Cette chaine de caractère chiffrée résulte a priori d'un chiffrement réalisé à l'aide du procédé présenté précédemment ;
- des moyens d'obtention d'une clé de chiffrement appartenant à l'ensemble de clés de chiffrement; il peut s'agir des mêmes clés que celles qui ont servi à la réalisation du chiffrement ou bien de clés publiques ou privées dans le cas d'un chiffrement asymétrique ;
- des moyens de déchiffrement de la chaine chiffrée à l'aide de la clé de chiffrement, délivrant une délivrant une chaine de caractères ;
- des moyens d'obtention d'une grammaire descriptive du langage du code à chiffrer ;
- un module de décodage de la chaine de caractères à l'aide de la grammaire descriptive délivrant une chaine de caractères décodée au sein de laquelle au moins une représentation dans la chaine de caractères est décodée en une instruction chaine de caractères décodée.

Selon une implémentation préférée, les différentes étapes des procédés selon la technique proposée sont mises en œuvre par un ou plusieurs logiciels ou programmes d'ordinateur, comprenant des instructions logicielles destinées à être exécutées par un processeur de données d'un module relais selon la technique proposée et étant conçu pour commander l'exécution des différentes étapes des procédés.

En conséquence, la technique proposée vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout organe d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de la technique proposée.

## 4. Figures

D'autres caractéristiques et avantages de la technique proposée apparaîtront plus clairement à la lecture de la description suivante de deux modes de réalisation, donné à titre de simple exemple illustratif et non limitatif, et des dessins annexés, parmi lesquels :

- la figure 1 illustre le procédé de chiffrement de la présente technique ;
- la figure 2 illustre le procédé de déchiffrement de la présente technique ;
- la figure 3 est une représentation simplifiée d'un dispositif pour la mise en œuvre de la présente technique.

## 5. Description

5.1. Rappel

Comme indiqué préalablement, la technique décrire consiste à ajouter, lors du chiffrement, une étape supplémentaire, dite étape de codage, consistant à transformer le code à chiffrer (par exemple du code compilé ou du code intermédiaire i.e. bytecode) en une chaine de caractères spécifique (par exemple une chaine de caractère ne contenant qu'un seul et unique entier de grande longueur ou une chaine ASCII ou une chaine dans une autre base de codage) qui est ensuite chiffrée. A l'inverse, du côté du récepteur, postérieurement au déchiffrement, la chaine de caractère obtenue est décodée selon le processus de décodage inverse du processus de codage.

Cependant, on ne se contente pas, selon la technique décrite, d'effectuer un codage du code à chiffrer. On réalise un codage particulier qui possède la propriété de produire une chaine de caractères qui *d'une part* ne peut pas, dans sa forme, être aisément distinguée d'une autre chaine de caractères et *d'autre part* qui peut toujours être décodée pour produire un code correct. Plus particulièrement, selon la technique proposée, n'importe quel code à chiffrer, dont la grammaire est connue du codeur, produit une chaine de caractères ; inversement, n'importe quelle chaine de caractères, fournie au décodeur (qui comprend la même grammaire), produit un code correct : c'est-à-dire un code syntaxiquement correct, dont il n'est pas possible, à priori, de donner une signification particulière.

Ainsi, en chiffrant non pas directement le code à protéger, mais un encodage particulier de ce code, on ralentit significativement un attaquant disposant d'un ensemble de clés de déchiffrement, ensemble qui est susceptible de contenir une clé correcte en l'empêchant de différencier un résultat de déchiffrement ayant du sens d'un résultat aléatoire (mais grammaticalement correct) obtenu par une mauvaise clé.

En garantissant par le respect de la grammaire (sémantique) du langage du code que les déchiffrés de toute chaine de caractères sont des codes exécutables valides, on impose à l'attaquant d'effectuer une analyse sémantique au cas par cas pour essayer d'authentifier le code source original (sans qu'il soit garanti que l'attaquant parvienne à effectuer une telle analyse). En effet, pour pouvoir réaliser une telle analyse, l'attaquant doit vérifier le fonctionnement du logiciel obtenu par ce code. Cela signifie que pour chaque déchiffré (chaque chaine obtenu par une opération de décodage), l'attaquant doit optionnellement compiler ce déchiffré (lorsqu'il s'agit de code source) et l'implanter au sein du dispositif afin de vérifier le fonctionnement de celui-ci. On comprend que lorsque le nombre de clés disponible est important, ces opérations de vérification sont complexes et longues à mener. Dès lors, il n'est pas du tout assuré que l'attaquant parvienne à ses fins de manière rapide.

De manière théorique on pose Sx le code assembleur d'un programme embarqué que l'on cherche à protéger en le chiffrant (ou obtient un code chiffré Cx). Comme explicité précédemment, la clé de déchiffrement *Kx* ne peut pas être confiée à un Tiers de Confiance (car le produit n'est pas nécessairement en ligne au moment de la mise à jour) et doit donc être placée sur (ou dans) le produit à protéger (par exemple sur ou dans le terminal de paiement). Pour créer une confusion chez l'attaquant, un certain nombre de clés erronées (*Ky, Kz,* etc.) sont également introduites sur ou dans le produit. Ainsi, grâce à la technique décrite, quand bien même un attaquant réussirait à obtenir une clé (voire plusieurs ou toutes les clés), il est plus compliqué pour lui de déterminer si cette clé est une clé valide ou non.

En effet, supposons qu'un attaquant est capable de récupérer tout ou partie de l'ensemble des clés disponibles *(Kx, Ky, Kz).* De manière traditionnelle (i.e. sans employer la technique objet de la présente), en déchiffrant le code chiffré **Cx** avec chaque clé récupérée, l'attaquant obtient soit **Sx** s'il s'agit de la bonne clé, soit quelque chose d'aléatoire *(Ry, Rz)* s'il s'agit de la mauvaise clé. Dans ce cas, la distinction entre l'aléatoire *(Ry, Rz)* et le code correct *Sx* est facile à faire pour l'attaquant et peu consommatrice de temps et/ou d'argent : en effet soit l'attaquant obtient un code (par exemple assembleur) correct, immédiatement identifiable, soit il obtient un bruit aléatoire, qui ne ressemble en rien à un code assembleur. Lorsqu'il obtient un bruit aléatoire, l'attaquant sait que la clé utilisée n'est pas la bonne et il peut directement passer à la clé suivante.

À l'inverse, avec la technique décrite, l'attaquant dispose, à l'issue du déchiffrement avec l'une quelconque des clés *(Kx, Ky, Kz),* d'une chaine de caractères qu'il est nécessaire de décoder en la passant dans un décodeur adéquat (appelé décodeur réversible). Le décodeur réversible est conçu de telle manière que n'importe quelle entrée produit un code déchiffré correct. Cela est dû au fait que le décodeur, comme le codeur, intègre une connaissance de la grammaire du code du programme et que le codage et le décodage sont réalisés en fonction de cette grammaire. Ainsi, quel que soit l'entrée du décodeur, un code assembleur (ou intermédiaire dans le cas du bytecode) est produit. Pour un attaquant, il est dès lors très difficile de distinguer un code produit avec la clé correcte *Kx* d'un code produit avec un leurre (i.e. une clé introduite pour tromper l'attaquant, *Ky, Kz*).

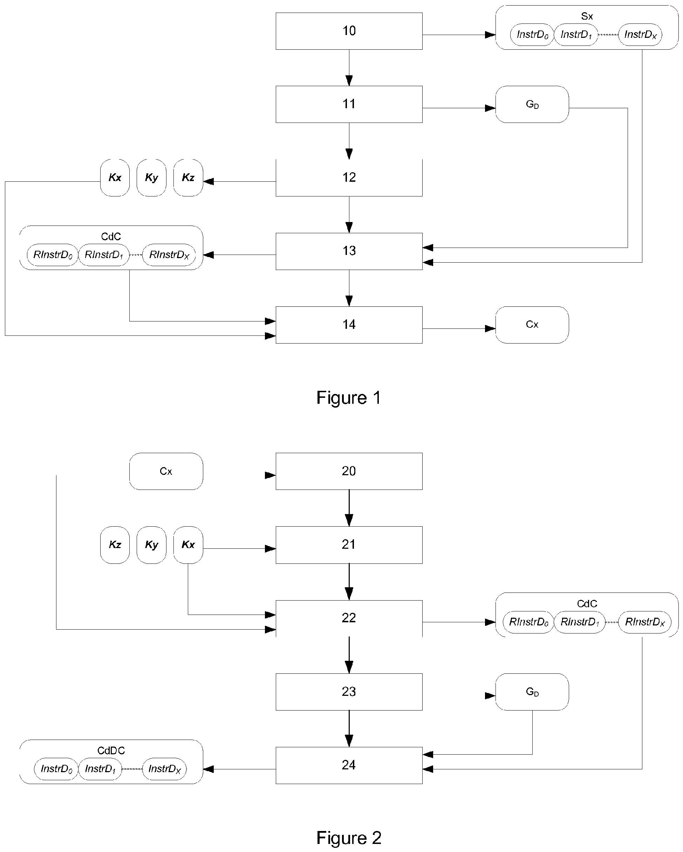

Le procédé de chiffrement de la présente technique est décrit en relation avec la figure 1. Ce procédé de chiffrement comprend :

- une étape de d'obtention (10) d'un code à chiffrer (*Sx*) ; Ce code à chiffrer est par exemple un code assembleur ou un code intermédiaire (bytecode) ;
- une étape d'obtention (11) d'une grammaire descriptive ($G_D$) du langage du code à chiffrer ;
- une étape d'obtention (12) d'un ensemble de clés de chiffrement (*Kx, Ky, Kz*) ;
- une étape de codage (13) du code à chiffrer (Sx) à l'aide de la grammaire descriptive ($G_D$) délivrant une chaine de caractères *(CdC)* au sein de laquelle au moins une instruction de départ (*InstrD*) du code à chiffrer *(Sx)* est codée en une représentation (*RInstrD*) dans la chaine de caractères *(CdC).* La représentation (*RInstrD*) est le résultat d'un calcul opéré à partir de l'instruction et de paramètres liés à l'instruction au sein de la grammaire ;
- une étape de chiffrement (14) de la chaine de caractères *(CdC)* à l'aide d'une clé de chiffrement *(Kx)* appartenant à l'ensemble de clés de chiffrement *(Kx, Ky, Kz),* délivrant une chaine chiffrée *(Cx).*

Ainsi, le codage qui est fait du code d'entrée tient compte de la grammaire du code lui-même. Cela permet d'introduire une certaine intelligence dans le codage et de se démarquer des méthodes basiques existante qui consistent souvent à coder en réalisant une transformation en base 16 ou en base 64. A l'inverse, la technique décrite introduit une certaine compréhension de ce qui est codé. Accessoirement, dans un mode de réalisation spécifique, le codage est réalisé de manière récursive. Un tel codage n'est pas obligatoire, mais il permet de s'assurer que l'ensemble du processus de codage aura un résultat qui soit décodable de manière récursive, et donc plus sécurisé dans la mesure où il est absolument nécessaire de réaliser un décodage complet de la chaine avant de pouvoir vérifier si cette chaine peut éventuellement correspondre au code source correct. Cela évite à l'attaquant de décoder un premier mot, puis un deuxième, etc. (ce qui serait possible en cas de codage itératif).

Le procédé de déchiffrement de la présente technique est décrit en relation avec la figure 2. Il est l'inverse du procédé de chiffrement. Ce procédé de déchiffrement comprend :

- une étape de d'obtention (20) d'une chaine chiffrée (*Cx*) ; Cette chaine de caractère chiffrée résulte a priori d'un chiffrement réalisé à l'aide du procédé présenté précédemment ;
- une étape d'obtention (21) d'une clé de chiffrement *(Kx)* appartenant à l'ensemble de clés de chiffrement *(Kx, Ky, Kz*) ; il peut s'agir des mêmes clés que celles qui ont servi à la réalisation du chiffrement (cas d'un chiffrement symétrique) ou bien de clés publiques ou privées dans le cas d'un chiffrement asymétrique ;
- une étape de déchiffrement (22) de la chaine chiffrée (Cx) à l'aide de la clé de chiffrement *(Kx),* délivrant une délivrant une chaine de caractères **(CdC)** ;
- une étape d'obtention (23) d'une grammaire descriptive ($G_D$) du langage du code à chiffrer ;
- une étape de décodage (24) de la chaine de caractères *(CdC)* à l'aide de la grammaire descriptive ($G_D$) délivrant une chaine de caractères décodée *(CdDC)* au sein de laquelle au moins une représentation (*RInstrD*) dans la chaine de caractères *(CdC)* est décodée en une instruction (*InstrD*) chaine de caractères décodée *(CdDC)* ; l'instruction obtenue est représentative d'un calcul opéré à partir de la représentation (*RInstrD*) et de paramètres liés aux instructions au sein de la grammaire et notamment aux instructions précédemment décodées : les instructions précédemment décodées sont utilisées pour permettre de déterminer un enchainement d'instructions (et de paramètres d'instructions) qui soit logique au regard de la grammaire.

Bien entendu, les clés de chiffrement (et éventuellement de déchiffrement lorsqu'elles sont différentes) sont choisies pour que le type de la chaine de caractère soit préservé lors de l'opération de chiffrement ou de l'opération de déchiffrement. Par exemple, lorsque le module de décodage attend, en entrée, une chaine de caractère comprenant un unique entier, toutes les clés de déchiffrement sont choisies pour produire, à l'issue du déchiffrement, un grand entier contenu dans une chaine de caractères. Ainsi, il n'est pas possible de distinguer directement entre une clé valide et une clé invalide, puisque le résultat obtenu (par exemple un entier) correspond à un résultat attendu qui est valide pour le module de décodage. Le module de décodage, ayant en entrée un paramètre correct (par exemple un entier) et la grammaire descriptive, est toujours à même de produire, en sortie, un code correct.

5.2. Mode de réalisation

Dans ce mode de réalisation, on explicite une méthode de codage et une méthode de décodage particulières. Plus particulièrement, le codeur produit un entier de grande taille (représenté par exemple sous la forme d'une chaine de caractères numériques). A l'inverse, le décodeur accepte un entier de grande taille et fournit, en résultat, un code assembleur.

On suppose, dans ce mode de réalisation, un code compilé (code assembleur) comprenant un certain nombre d'instructions, chaque instruction étant une instance. Ces instructions sont connues du codeur (et du décodeur par voie de conséquence) sous la forme d'une grammaire. Cette grammaire comprend d'une part la liste des instructions possibles et d'autre part les éventuels type d'arguments de ces instructions lorsqu'elles en ont. Ainsi, par exemple, une instruction « movb », qui est une instruction d'écriture d'une valeur dans un registre, comprend deux paramètres que sont une valeur (par exemple $0x61) et un registre de destination (par exemple « %al »).

En d'autres termes, un code assembleur se présente sous forme d'instructions d'une taille donnée, une partie de l'instruction étant l'opération et le reste ses arguments. On peut donc décomposer un code assembleur, même sous forme binaire, en « mots » ou « tokens ». Le code est alors représenté comme une suite de mots ou de token. Chaque mot a un « type » (instruction, adresse, constante) qui permet de connaître la sémantique du code binaire le représentant. Étant donné un code assembleur d'origine, c'est la sémantique (grammaire) du langage assembleur utilisé qui fournit les instructions de décodage. Chaque type a un nombre fini d'instance (par exemple, le nombre d'instructions possibles est fini). À chaque instance d'un type est associé un identificateur (non nul) au sein de ce type.

Ainsi :

- On note *v* le mot vide. ;
- Soit un mot non-vide *m* (*soit une instruction, une adresse, une valeur, un numéro de registre, etc.) ;*
- *T(m)* est le cardinal du type de *m* *(c'est-à-dire le nombre de types de mots non vides) ;*
- *I(m)* est l'identificateur de *m* (cet identificateur peut être compris entre *0* et *T(m)-1*) ;
- *Sx* est le code d'origine (par exemple assembleur) à transformer ; et
- *Sx = m S'x,* ce qui signifie que le code d'origine à transformer *Sx* est égal à un mot non vide *m* suivi du *reste* du code d'origine à transformer *S'x.*

Dans ce mode de réalisation, la technique est mise en œuvre par l'intermédiaire d'un module logiciel. Ce module logiciel est utilisé de manière récursive. Le module logiciel de codage est désigné par les lettres *« CRP ».* Le module logiciel de décodage est désigné par les lettres *« CRP⁻¹ ».* Bien entendu, le module *« CRP »* et le module *« CRP⁻¹ »* peuvent être un seul et même module, agissant comme un codeur ou comme un décodeur en fonction d'un paramétrage adéquat.

Il en résulte que le codage (la transformation en entier) du code d'origine *Sx* en entier de (très) grande taille est effectué (récursivement) de la manière suivante :

- *CRP(v) = 0*; et
-

$$CRP(m\ S'x) = T(m)*(CRP(S'x)) + I(m).$$

On note dans l'expression précédente l'appel récursif effectué à *« CRP »* sur *S'x.*

Ainsi, le résultat de *CRP(m S'x)* est un entier résultant de la multiplication du cardinal du type de m **[*T(m)*]** par l'entier *CRP(S'x),* multiplication à laquelle on ajoute l'identificateur de *m* **[*I(m)*].**

Ainsi, par exemple, le code suivant :

```
mov eax, 4
mov ebx, 1
int 80h
```

génère l'entier suivant :

$$2(2(3(2(2(3(2(3 \times 0 + 2) + 1) + 1) + 1) + 0) + 0) + 0) + 0 = 792$$

En prenant en considération les éléments suivants (arbitrairement, pour les besoins de l'exemple donné et en considérant que le codeur *« CRP »* ne connaît que trois types et qu »e les valeurs considérées) :

- mov et int sont deux types d'instructions : le cardinal du type de mov et int est 2. L'identificateur de mov est 0 et l'identificateur de int est 1 ;
- eax et ebx sont des types de registre. le cardinal du type de eax et ebx est 2. L'identificateur de eax est 0 et l'identificateur de ebx est 1 ;
- 4, 1 et 80h sont des types de valeurs. L'identificateur de 4 est 0 et l'identificateur de 1 est 1 et l'identificateur de 80h est 2.

On comprend bien entendu, à la lecture des explications données, que parmi les éléments importants pour le calcul de cet entier on a *T(m) et I(m).* Ces valeurs sont acquises par l'utilisation de la grammaire descriptive.

En fonction d'un identificateur, avec type implicite, on retrouve le mot correspondant (c'est-à-dire une instruction de départ). Ainsi, dans le décodage, on fait également intervenir la grammaire ; Cela garanti, que pour une chaine en entrée, préalablement déchiffrée, on trouvera toujours une chaine décodée qui grammaticalement correcte. En d'autres termes, on trouvera toujours une suite de mots de codes de langage qui signifie quelque chose. Pour ce faire, le cardinal d'un type de mot et l'identifiant d'un mot dans ce cardinal permettent tout à la fois de calculer un entier (comme explicité préalablement) et à partir d'un entier donné de trouver une suite de mots du langage d'origine (comme cela est explicité par la suite).

Ceci est nettement différent des méthodes de codage et de décodage basée par exemple sur une transformation en base 16 ou en base 64 dans lesquelles la signification de la chaine qui est codée n'importe pas.

A l'inverse, pour décoder un nombre naturel n, on fait appel à *CRP$^{-1}$* qui utilise récursivement une fonction de décodage *D* prenant en argument un type attendu **T** (de cardinal |**T**|) et un entier naturel **n** :

- *D(0) = v ;* et
-
$$D(n,T) = I^{-1}(n \bmod |T|) \, D(n/|T|, T').$$

où on utilise la division entière et où T' est donné par la grammaire du langage. Ainsi, pour l'exemple précédent :

$$792 = 2(2(3(2(2(3(2(3 \times 0 + 2) + 1) + 1) + 1) + 0) + 0) + 0) + \mathbf{0}$$

On obtient donc le code d'origine à partir des types et des identificateurs préalablement donnés. On note, par exemple, que le nombre 793 ne donnerai pas le même code. En effet :

$$793 = 2(2(3(2(2(3(2(3 \times 0 + 2) + 1) + 1) + 1) + 0) + 0) + 0) + \mathbf{1}$$

Soit le code suivant :

```
int eax, 4
mov ebx, 1
int 80h
```

On note, par exemple, que le nombre 795 ne donnerai pas le même code. En effet :

$$795 = 2(2(3(2(2(3(2(3 \times 0 + 2) + 1) + 1) + 1) + 0) + 0) + 1) + \mathbf{1}$$

Soit le code suivant :

```
int ebx, 4
mov ebx, 1
int 80h
```

On comprend ainsi un aspect important de la technique proposée : lorsqu'un attaquant possède un code chiffré *(Cx)* et qu'il possède également au moins deux clés *(Kx, Ky)* de l'ensemble de clés, il applique les deux clés sur le code chiffré *(Cx)* afin de déchiffrer ce code chiffré. L'utilisation de l'une ou de l'autre clé permet de déchiffrer le code chiffré *(Cx)* et d'obtenir un nombre (par exemple 795 et 792). On suppose maintenant que l'attaquant possède également le module de décodage (le module « *CRP* » ou module « *CRP$^{-1}$* »). Si l'attaquant applique le module sur chacun des deux nombres 795 et 792, il n'obtient pas le même code assembleur à l'issu du décodage. Il est alors beaucoup plus compliqué pour l'attaquant de distinguer entre les deux codes obtenus lequel est le bon.

Ces exemples sont bien entendu purement illustratifs et ne sont proposés que pour la bonne compréhension de la technique proposée. On comprend, pour une intégration complète d'un langage comme l'assembleur :

- que les types d'instruction sont plus nombreux (ce qui est également le cas de la cardinalité et des identifiants) ;
- que le nombre de registres est plus important (ce qui est également le cas de la cardinalité et des identifiants de ces registres) ;
- plutôt que de lister les valeurs possibles des arguments des instructions (4, 1 et 80h dans l'exemple) et d'en déterminer le cardinal et l'identifiant (ce qui est audacieux voire sous optimal), il est préférable de réaliser une transformation directe de ces valeurs d'arguments en entiers au sein du module de codage ;
- que les séparateurs (retour à la ligne, espace « », virgule «, », point-virgule « ; », etc.) peuvent également faire l'objet d'une intégration afin de faciliter le codage et le décodage (en lien avec la grammaire).

5.3. Dispositif de mise en œuvre

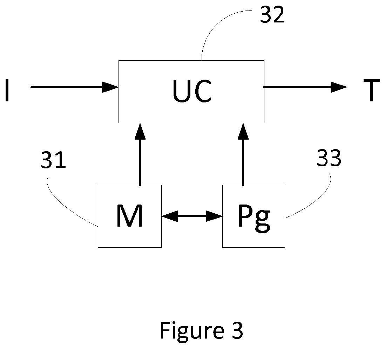

On décrit, en relation avec la figure 3, un dispositif comprenant des moyens permettant l'exécution du procédé décrit préalablement.

Par exemple, le dispositif comprend une mémoire 31 constituée d'une mémoire tampon, une unité de traitement 32, équipée par exemple d'un microprocesseur, et pilotée par le programme d'ordinateur 33, mettant en œuvre les étapes nécessaires au chiffrement et/ou au déchiffrement et/ou au codage et/ou au décodage telles que décrites préalablement.

À l'initialisation, les instructions de code du programme d'ordinateur 33 sont par exemple chargées dans une mémoire avant d'être exécutées par le processeur de l'unité de traitement 32. L'unité de traitement 32 reçoit en entrée par exemple un code assembleur ou un code intermédiaire à chiffrer ou à encoder. Le microprocesseur de l'unité de traitement 32 met en œuvre les étapes du procédé chiffrement et/ou de codage, selon les instructions du programme d'ordinateur 33 pour effectuer une transformation du code assembleur ou du code intermédiaire.

Pour cela, le dispositif comprend, outre la mémoire tampon 31, des moyens de calcul de chaine de caractères de grande longueur et/ou des moyens de calcul d'entiers de grande longueur et éventuellement un processeur de chiffrement et éventuellement des moyens de communications, tels que des modules de communication réseau, bien que ceux-ci ne soient pas indispensables. Ces moyens peuvent être pilotés par le processeur de l'unité de traitement 32 en fonction du programme d'ordinateur 33. Ces moyens se présentent également sou la forme de modules, logiciels ou matériels, spécifiquement ou non dédiés à la mise en œuvre de la présente technique. Par ailleurs, le processeur en charge peut être un processeur sécurisé permettant de se prémunir contre une attaque durant les phases de chiffrement ou de déchiffrement.

**Revendications**

1. Procédé de chiffrement d'un code à chiffrer **(Sx)** d'un programme informatique à l'aide d'une clé de chiffrement **(Kx)** sélectionnée parmi au moins deux clés de chiffrement **(Kx, Ky, Kz),** le code à chiffrer **(Sx)** se présentant sous la forme d'un code compilé ou d'un code intermédiaire, le procédé comprenant :

   - une étape d'obtention (11) d'une grammaire descriptive ($G_D$) du langage du code à chiffrer ;

   procédé **caractérisé en ce qu'**il comprend :

   - une étape de codage (13) du code à chiffrer **(Sx)** à l'aide de la grammaire descriptive ($G_D$) délivrant une chaine de caractères **(CdC)** au sein de laquelle au moins une instruction de départ (**InstrD**) du code à chiffrer **(Sx)** est codée en une représentation (**RInstrD**) dans la chaine de caractères **(CdC),** ladite étape de codage (13) est mise en œuvre de manière récursive, une représentation (**RInstrDi**) d'une instruction de départ (**InstrDi**) étant calculée à l'issue d'un calcul préalable d'une représentation (**RInstrDi+1**) d'une instruction suivante (**InstrDi+1**) du code à chiffrer ;
   - une étape de chiffrement (14) de la chaine de caractères **(CdC)** à l'aide d'une clé de chiffrement **(Kx)** appartenant à l'ensemble de clés de chiffrement **(Kx, Ky, Kz),** délivrant une chaine chiffrée **(Cx).**

2. Procédé de chiffrement selon la revendication 1, **caractérisé en ce que** ladite étape de codage (13) comprend, pour une instruction de départ (**InstrD**) du code à chiffrer **(Sx),** une étape d'obtention, au sein de ladite grammaire descriptive ($G_D$), d'un type de l'instruction de départ (*InstrD*) et une étape d'obtention, au sein de ladite grammaire descriptive ($G_D$), d'un identifiant de l'instruction de départ (*InstrD*) au sein d'un cardinal du type de l'instruction de départ (*InstrD*).

3. Procédé de chiffrement selon la revendication 2, **caractérisé en ce que** ladite étape de codage (13) comprend, pour une instruction de départ (*InstrD*) du code à chiffrer **(Sx),** une étape de calcul de ladite représentation (*RInstrD*) en fonction dudit type de l'instruction de départ (*InstrD*) et dudit identifiant de l'instruction de départ (*InstrD*) au sein du cardinal du type de l'instruction de départ (*InstrD*).

4. Procédé de chiffrement selon la revendication 1, **caractérisé en ce que** ladite étape de codage (13) du code à chiffrer **(Sx)** délivre une chaine de caractères **(CdC)** comprenant un unique entier.

5. Dispositif de chiffrement d'un code à chiffrer **(Sx)** d'un programme informatique à l'aide d'une clé de chiffrement **(Kx)** sélectionnée parmi au moins deux clés de chiffrement **(Kx, Ky, Kz),** le code à chiffrer **(Sx)** se présentant sous la forme d'un code compilé ou d'un code intermédiaire, le dispositif comprenant :

- des moyens d'obtention (11) d'une grammaire descriptive ($G_D$) du langage du code à chiffrer ;

dispositif **caractérisé en ce qu'**il comprend :

- un module de codage (13) du code à chiffrer **(Sx)** à l'aide de la grammaire descriptive ($G_D$) délivrant une chaine de caractères **(CdC)** au sein de laquelle au moins une instruction de départ (*InstrD*) du code à chiffrer **(Sx)** est codée en une représentation (*RInstrD*) dans la chaine de caractères **(CdC),** le module de codage (13) est mis en œuvre de manière récursif, une représentation (*RInstrDi*) d'une instruction de départ (*InstrDi*) étant calculée à l'issue d'un calcul préalable d'une représentation (*RInstrDi+1*) d'une instruction suivante (*InstrDi+1*) du code à chiffrer ;
- des moyens de chiffrement (14) de la chaine de caractères **(CdC)** à l'aide d'une clé de chiffrement *(Kx)* appartenant à l'ensemble de clés de chiffrement **(Kx, Ky, Kz),** délivrant une chaine chiffrée **(Cx).**

6. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de chiffrement selon la revendication 1, lorsqu'il est exécuté sur un processeur.

7. Procédé de déchiffrement d'un code d'un programme informatique à l'aide d'une clé de chiffrement sélectionnée parmi au moins deux clés de chiffrement, le code se présentant sous la forme d'un code compilé ou d'un code intermédiaire, procédé **caractérisé en ce qu'**il comprend :

- une étape de d'obtention (20) d'une chaine chiffrée **(Cx)** ;
- une étape d'obtention (21) d'une clé de chiffrement **(Kx)** appartenant à l'ensemble de clés de chiffrement **(Kx, Ky, Kz)** ;
- une étape de déchiffrement (22) de la chaine chiffrée **(Cx)** à l'aide de la clé de chiffrement **(Kx),** délivrant une délivrant une chaine de caractères **(CdC)** ;
- une étape d'obtention (23) d'une grammaire descriptive ($G_D$) du langage du code à chiffrer ;
- une étape de décodage (24) de la chaine de caractères **(CdC)** à l'aide de la grammaire descriptive ($G_D$) délivrant une chaine de caractères décodée **(CdDC)** au sein de laquelle au moins une représentation (*RInstrD*) dans la chaine de caractères **(CdC)** est décodée en une instruction (*InstrD*) chaine de caractères décodée **(CdDC),** ladite étape de décodage (24) est mise en œuvre de manière récursive.

8. Dispositif de déchiffrement d'un code d'un programme informatique à l'aide d'une clé de chiffrement sélectionnée parmi au moins deux clés de chiffrement, le code se présentant sous la forme d'un code compilé ou d'un code intermédiaire, le dispositif **caractérisé en ce qu'**il comprend :

- des moyens d'obtention (20) d'une chaine chiffrée **(Cx)** ;
- des moyens d'obtention (21) d'une clé de chiffrement **(Kx)** appartenant à l'ensemble de clés de chiffrement **(Kx, Ky, Kz)** ;
- des moyens de déchiffrement (22) de la chaine chiffrée **(Cx)** à l'aide de la clé de chiffrement **(Kx),** délivrant une délivrant une chaine de caractères **(CdC)** ;

- des moyens d'obtention (23) d'une grammaire descriptive ($G_D$) du langage du code à chiffrer ;
- des moyens de décodage (24) de la chaine de caractères (**CdC**) à l'aide de la grammaire descriptive ($G_D$) délivrant une chaine de caractères décodée (**CdDC**) au sein de laquelle au moins une représentation (**RInstrD**) dans la chaine de caractères (**CdC**) est décodée en une instruction (**InstrD**) chaine de caractères décodée (**CdDC**), les moyens de décodage (24) étant mis en œuvre de manière récursive.

**9.** Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de déchiffrement selon la revendication 8, lorsqu'il est exécuté sur un processeur.


**Patentansprüche**

**1.** Verfahren zum Verschlüsseln eines zu verschlüsselnden Codes **(Sx)** eines Computerprogramms mit Hilfe von einem Verschlüsselungsschlüssel **(Kx),** der aus mindestens zwei Verschlüsselungsschlüsseln **(Kx, Ky, Kz)** ausgewählt wird, wobei der zu verschlüsselnde Code **(Sx)** die Form eines kompilierten Codes oder eines Zwischencodes aufweist, wobei das Verfahren aufweist:

- einen Schritt des Erhaltens (11) einer beschreibenden Grammatik ($G_D$) der Sprache des zu verschlüsselnden Codes,

Verfahren, **dadurch gekennzeichnet, dass** es aufweist:

- einen Schritt des Codierens (13) des zu verschlüsselnden Codes **(Sx)** mit Hilfe von der beschreibenden Grammatik ($G_D$), der eine Zeichenfolge **(CdC)** bereitstellt, in der mindestens ein Startbefehl **(InstrD)** des zu verschlüsselnden Codes **(Sx)** in einer Darstellung **(RinstrD)** in der Zeichenfolge **(CdC)** codiert wird, wobei der Schritt des Codierens (13) rekursiv umgesetzt, wobei eine Darstellung **(RinstrDi)** eines Startbefehls **(InstrDi)** nach Abschluss einer Vorausberechnung einer Darstellung **(RinstrDi+1)** eines nachfolgenden Befehls **(InstrDi+1)** des zu verschlüsselnden Codes berechnet wird,
- einen Schritt zum Verschlüsseln (14) der Zeichenfolge **(CdC)** mit Hilfe von einem Verschlüsselungsschlüssel **(Kx),** der zu der Gesamtheit der Verschlüsselungsschlüssel **(Kx, Ky, Kz)** gehört, der eine verschlüsselte Folge **(Cx)** bereitstellt.

**2.** Verfahren zum Verschlüsseln nach Anspruch 1, **dadurch gekennzeichnet, dass** der Schritt des Codierens (13) für einen Startbefehl **(InstrD)** des zu verschlüsselnden Codes **(Sx)** einen Schritt des Erhaltens in der beschreibenden Grammatik ($G_D$) eines Typs des Startbefehls **(InstrD)** und einen Schritt des Erhaltens in der beschreibenden Grammatik ($G_D$) einer Kennung des Startbefehls **(InstrD)** in einem Kardinale des Typs des Startbefehls **(InstrD)** aufweist.

**3.** Verfahren zum Verschlüsseln nach Anspruch 2, **dadurch gekennzeichnet, dass** der Schritt des Codierens (13) für einen Startbefehl **(InstrD)** des zu verschlüsselnden Codes (Sx) einen Schritt des Berechnens der Darstellung **(RinstrD)** in Abhängigkeit von dem Typ des Startbefehls **(InstrD)** und der Kennung des Startbefehls **(InstrD)** in dem Kardinale des Typs des Startbefehls **(InstrD)** aufweist.

**4.** Verfahren zum Verschlüsseln nach Anspruch 1, **dadurch gekennzeichnet, dass** der Schritt des Codierens (13) des zu verschlüsselnden Codes **(Sx)** eine Zeichenfolge **(CdC)** bereitstellt, die eine einzige Ganzzahl aufweist.

**5.** Vorrichtung zum Verschlüsseln eines zu verschlüsselnden Codes **(Sx)** eines Computerprogramms mit Hilfe von einem Verschlüsselungsschlüssel **(Kx),** der aus mindestens zwei Verschlüsselungsschlüsseln **(Kx, Ky, Kz)** ausgewählt ist, wobei der zu verschlüsselnde Code **(Sx)** die Form eines kompilierten Codes oder eines Zwischencodes aufweist, wobei die Vorrichtung aufweist:

- Mittel zum Erhalten (11) einer beschreibenden Grammatik ($G_D$) der Sprache des zu verschlüsselnden Codes,

Vorrichtung, **dadurch gekennzeichnet, dass** sie aufweist:

- ein Modul zum Codieren (13) des zu verschlüsselnden Codes **(Sx)** mit Hilfe von der beschreibenden Grammatik ($G_D$), die eine Zeichenfolge **(CdC)** bereitstellt, in der mindestens ein Startbefehl **(InstrD)** des zu verschlüsselnden Codes **(Sx)** in einer Darstellung **(RinstrD)** in der Zeichenfolge **(CdC)** codiert ist, wobei das Modul zum Codieren (13) rekursiv umgesetzt ist, wobei eine Darstellung **(RinstrDi)** eines Startbefehls **(InstrDi)** nach Abschluss einer Vorausberechnung einer Darstellung **(RinstrDi+1)** eines nachfolgenden Befehls **(InstrDi+1)** des zu verschlüsselnden Codes berechnet ist,

- Mittel zum Verschlüsseln (14) der Zeichenfolge **(CdC)** mit Hilfe von einem Verschlüsselungsschlüssel **(Kx)**, der zu der Gesamtheit der Verschlüsselungsschlüssel **(Kx, Ky, Kz)** gehört, die eine verschlüsselte Folge **(Cx)** bereitstellen.

6. Computerprogrammprodukt, das von einem Kommunikationsnetzwerk heruntergeladen und/oder auf einem computerlesbaren Medium gespeichert und/oder von einem Mikroprozessor ausgeführt werden kann, **dadurch gekennzeichnet, dass** es Programmcodeanweisungen zum Ausführen eines Verfahrens zum Verschlüsseln nach Anspruch 1 aufweist, wenn es auf einem Prozessor ausgeführt wird.

7. Verfahren zum Entschlüsseln eines Codes eines Computerprogramms mit Hilfe von einem Verschlüsselungsschlüssel, der aus mindestens zwei Verschlüsselungsschlüsseln ausgewählt wird, wobei der Code die Form eines kompilierten Codes oder eines Zwischencodes aufweist, Verfahren, **dadurch gekennzeichnet, dass** es aufweist:

- einen Schritt zum Erhalten (20) einer verschlüsselten Folge **(Cx)**, - einen Schritt des Erhaltens (21) eines Verschlüsselungsschlüssels **(Kx)**, der zu der Gesamtheit der Verschlüsselungsschlüssel **(Kx, Ky, Kz)** gehört,
- einen Schritt zum Entschlüsseln (22) der verschlüsselten Folge **(Cx)** mit Hilfe von dem Verschlüsselungsschlüssel **(Kx)**, der eine Zeichenfolge **(CdC)** bereitstellt,
- einen Schritt des Erhaltens (23) einer beschreibenden Grammatik ($G_D$) der Sprache des zu verschlüsselnden Codes,
- einen Schritt des Dekodierens (24) der Zeichenfolge **(CdC)** mit Hilfe von der beschreibenden Grammatik ($G_D$), der eine decodierte Zeichenfolge **(CdDC)** bereitstellt, in der mindestens eine Darstellung **(RinstrD)** in der Zeichenfolge **(CdC)** in einen Befehl **(InstrD)** decodierte Zeichenfolge **(CdDC)** decodiert wird, wobei der Schritt des Dekodierens (24) rekursiv umgesetzt.

8. Vorrichtung zum Entschlüsseln eines Codes eines Computerprogramms mit Hilfe von einem Verschlüsselungsschlüssel, der aus mindestens zwei Verschlüsselungsschlüsseln ausgewählt wird, wobei der Code die Form eines kompilierten Codes oder eines Zwischencodes aufweist, wobei die Vorrichtung aufweist:

- Mittel zum Erhalten (20) einer verschlüsselten Folge **(Cx)**,
- Mittel zum Erhalten (21) eines Verschlüsselungsschlüssels **(Kx)**, der zu der Gesamtheit der Verschlüsselungsschlüssel **(Kx, Ky, Kz)** gehört,
- Mittel zum Entschlüsseln (22) der verschlüsselten Folge **(Cx)** mit Hilfe von dem Verschlüsselungsschlüssel **(Kx)**, die eine Zeichenfolge **(CdC)** bereitstellen,
- Mittel zum Erhalten (23) einer beschreibenden Grammatik ($G_D$) der Sprache des zu verschlüsselnden Codes,
- Mittel zum Dekodieren (24) der Zeichenfolge **(CdC)** mit Hilfe von der beschreibenden Grammatik ($G_D$), die eine decodierte Zeichenfolge (**CdDC**) bereitstellen, in der mindestens eine Darstellung **(RinstrD)** in der Zeichenfolge **(CdC)** in einen Befehl **(InstrD)** decodierte Zeichenfolge (**CdDC**) decodiert wird, wobei die Mittel zum Dekodieren (24) rekursiv umgesetzt werden.

9. Computerprogrammprodukt, das von einem Kommunikationsnetzwerk heruntergeladen und/oder auf einem computerlesbaren Medium gespeichert und/oder von einem Mikroprozessor ausgeführt werden kann, **dadurch gekennzeichnet, dass** es Programmcodeanweisungen zum Ausführen eines Verfahrens zum Entschlüsseln nach Anspruch 8 aufweist, wenn es auf einem Prozessor ausgeführt wird.

## Claims

1. Method for encrypting a code to be encrypted **(Sx)** of a computer program using an encryption key **(Kx)** selected from among at least two encryption keys **(Kx, Ky, Kz)**, said code to be encrypted **(Sx)** being in the form of a compiled code or an intermediate code, the method comprising:

- a step (11) for obtaining a descriptive grammar ($G_D$) of the language of the code to be encrypted;

method **characterized in that** it comprises:

- a step for encoding (13) the code to be encrypted (**Sx**) by means of the descriptive grammar (**G_D**) delivering a character string (**CdC**) within which at least one start instruction (**InstrD**) of the code to be encrypted (**Sx**) is encoded as a representation (**RInstrD**) in the character string (**CdC**); said step for encoding (13) is implemented recursively, a representation (**RInstrDi**) of a start instruction (**InstrD** being computed at the end of a preliminary computation of a representation (**RInstrDi+1** of a following instruction (**InstrDi+1**) of the code to be encrypted;
- a step of encryption (14) of the character string *(CdC)* by means of an encryption key (**Kx**) belonging to the set of encryption keys (**Kx, Ky, Kz**), delivering an encrypted string (**Cx**).

2. Method for encrypting according to claim 1, **characterized in that** said step for encoding (13) comprises, for a start instruction (**InstrD** of the code to be encrypted (**Sx**), a step for obtaining, within said descriptive grammar (**G_D**), a type of start instruction (**InstrD**) and a step for obtaining, within said descriptive grammar (**G_D**), an identifier of the start instruction within a cardinal of the type of start instruction (**InstrD**).

3. Method for encrypting according to claim 2, **characterized in that** said step for encoding comprises, for a start instruction (**InstrD**) of the code to be encrypted (**Sx**), a step for computing said representation (**RInstrD**) as a function of said type of start instruction (**InstrD**) and said identifier of the start instruction (**InstrD**) within the cardinal of the type of start instruction (**InstrD**).

4. Method for encrypting according to claim 1, **characterized in that** said step (13) for encoding the code to be encrypted (**Sx**) delivers a character string (**CdC**) comprising a unique integer.

5. Device for encrypting a code to be encrypted (**Sx**) of a computer program by means of an encryption key *(Kx)* selected from among at least two encryption keys (**Kx, Ky, Kz**), said code to be encrypted (**Sx**) being in the form of a compiled code or an intermediate code, the device comprising

- means for obtaining (11) a descriptive grammar (**G_D**) of the language of the code to be encrypted;
device **characterized in that** it comprises:
a module for encoding (13) the code to be encrypted (**Sx**) by means of the descriptive grammar (**G_D**) delivering a character string (**CdC**) within which at least one start instruction (**InstrD**) of the code to be encrypted (**Sx**) is encoded as a representation (**RInstrD**) in the character string (**CdC**); the module for encoding is implemented recursively, a representation (**RInstrDi**) of a start instruction (**InstrD**) being computed at the end of a preliminary computation of a representation (**RInstrDi+1** of a following instruction (**InstrDi+1**) of the code to be encrypted;
- means for encrypting (14) the character string (**CdC**) by means of an encryption key (**Kx**) belonging to the set of encryption keys (**Kx, Ky, Kz**), delivering an encrypted string (**Cx**).

6. Computer program product downloadable from a communications network and/or stored on a medium readable by a computer and/or executable by a microprocessor, **characterized in that** it comprises program code instructions for executing a method for encrypting according to claim 1, when it is executed on a processor.

7. Method for decrypting a code of a computer program by means of an encryption key selected from among at least two encryption keys, the code being in the form of a compiled code or an intermediate code, the method being **characterized in that** it comprises:

- a step for obtaining (20) an encrypted string (**Cx**);
- a step for obtaining (21) an encryption key (**Kx**) belonging to the set of encryption keys (**Kx, Ky, Kz**);
- a step for decrypting (22) the encrypted string (**Cx**) by means of the encryption key (**Kx**) delivering a character string (**CdC**);
- a step for obtaining (23) a descriptive grammar (**G_D**) of the language of the code to be encrypted;
- a step for decoding (24) the character string (**CdC**) by means of the descriptive grammar (**G_D** delivering a decoded character string (**CdD** within which at least one representation (**RInstrD**) in the character string is decoded (**CdC**) as an instruction (**InstrD**) in a decoded character string (**CdDC**).

8. Device for decrypting a code of a computer program by means of an encryption key selected from among at least two encryption keys, the code being in the form of a compiled code or an intermediate code, the device being **characterized in that** it comprises:

- means for obtaining (20) an encrypted key (**Cx**);
- means for obtaining (21) an encryption key (**Kx**) belonging to the set of encryption keys (**Kx, Ky, Kz**);

- means for decrypting (22) the encrypted string (**Cx**) by means of the encryption key (**Kx**) delivering a character string (**CdC**) ;
- means for obtaining (23) a descriptive grammar ($G_D$) of the language of the code to be encrypted;
- means for decoding (24) the character string (**CdC**) by means of the descriptive grammar ($G_D$) delivering a decoded character string (**CdDC**) within which at least one representation (**RInstrD**) in the character string (**CdC**) is decoded as an instruction (**InstrD**) in a decoded character string (**CdDC**), said means for decoding (24) being implemented recursively.

9. Computer program product downloadable from a communications network and/or stored on a medium readable by a computer and/or executable by a microprocessor, **characterized in that** it comprises program code instructions for executing a method for decrypting according to claim 8, when it is executed on a processor.

Figure 1

Figure 2

Figure 3

**RÉFÉRENCES CITÉES DANS LA DESCRIPTION**

**Documents brevets cités dans la description**

- GB 2492618 A